Europäisches Patentamt

European Patent Office

Office européen des brevets

(11) Publication number: **0 096 505**
**A1**

(12) **EUROPEAN PATENT APPLICATION**

(21) Application number: **83302978.8**

(22) Date of filing: **24.05.83**

(51) Int. Cl.³: **B 65 G 1/08**

(30) Priority: **31.05.82 JP 92421/82**

(43) Date of publication of application:
**21.12.83 Bulletin 83/51**

(84) Designated Contracting States:
**CH DE FR GB IT LI SE**

(71) Applicant: Kao Corporation
14-10, Nihonbashi Kayabacho 1 chome
Chuo-Ku Tokyo 103(JP)

(72) Inventor: Tanaka, Nobuhiro
22-15 Miyashirodai 1-chome Miyashiromachi
Minamisaitamagun Saitama(JP)

(74) Representative: Nettleton, John Victor et al,
Abel & Imray Northumberland House 303-306 High
Holborn
London, WC1V 7LH(GB)

(54) **Picking device.**

(57) A multiple conveyor device is provided having a set of conveyors (2) in a case flow rack (1) for constantly supplying articles (3) to one end thereof and a selecting conveyor (10) movable between the conveyors (2) of the rack (1); the selecting conveyor (10) is movable so as to dislodge one or more articles (3) from each conveyor (2) of the conveyor rack (1) and for conveying the dislodged article or articles (3) to a delivery conveyor (13).

FIG.1

## PICKING DEVICE

The present invention relates to a device for picking loads of a predetermined type in a predetermined number out of various loads carried on conveyors of a case flow rack.

The conventional case flow rack of this type for picking loads is constructed with 3 or 4 stacks of free roller conveyors which are provided with downward slope and stoppers projecting at the bottom of the slopes. Different types of cases are placed on different conveyors respectively and the cases which move downward on the conveyors by their own weight are stopped by said stoppers. In such a prior art picking arrangement, an operator manually picks the cases by a required number from respective conveyors and places them on a conveyor separately provided for carrying them outside.

Another example of the prior art picking device comprises roller conveyors driven by belts and a belt conveyor having a high-speed drum adjacent to the discharge side of said roller conveyors. As the speed of each conveyor is designed to be accelerated consecutively according to the order of conveyance, when each conveyor is driven upon receipt of a discharge control signal, loads such as cartons are separated on the conveyors into single items and automatically transported by other separate conveyors while the necessary number of loads is measured by a photoswitch or similar devices.

As the prior art picking device mentioned above picks various types of loads by small quantities, it requires a great deal of labor when manually operated; even when automatically operated, it is necessary to install a complicated device for each conveyor, thereby requiring an undesirably large space for installing the case flow racks as well as thereby increasing the cost of the system.

The present invention aims at obviating the aforementioned inconveniences, and at providing a picking device: (a) which can automatically pick a necessary number of cases of various types; (b) which needs less space for the case flow rack; and (c) which is inexpensive.

The present invention as claimed provides:

A transfer apparatus for articles comprising a first conveyor having a top surface having means on which articles are slidable, said first conveyor having, adjacent one end thereof, stopper means projecting to a selected height above said top surface to stop articles sliding on said first conveyor, a second conveyor having an end portion which is positionable between said stopper means and the other end of said first conveyor means, said second conveyor having a top surface with sliding means movable between a position below said selected height of said stopper means of said first conveyor and a position above said selected height, said second conveyor means being of a size to accommodate a selected number of articles stopped by said stopper means of said first conveyor when said end portion of said second conveyor is moved above said selected height.

The present invention is characterized by the construction comprising first conveyors which are structured to slide loads mounted on the top surfaces thereof and which are provided with stoppers projecting to a predetermined height from the top surface in order to stop said loads at one end of the first conveyors, and second conveyors at least a part of which can be positioned at a point closer to the opposite end or arrival side of such loads than the position of said stoppers on the first conveyors and sliding surface of which can be positioned variably either above or below said predetermined height, said second conveyors being so constructed that a predetermined number of the loads stopped by said stoppers is transferred from said first conveyors to said second conveyors as the sliding surface of said conveyors is displaced above said predetermined height.

It is preferable that said first conveyors are provided with a downward slope toward the stoppers while said second conveyors are sloped downward toward the discharge side of the loads when they are displaced above the predetermined height of the stoppers.

A portion of said second conveyors is made preferably movable to both the arrival and the discharge directions in respect of the position of the stopper or the reference position, and the scope of such a movement is preferably variable.

Moreover, said second conveyors may be positioned wholly on the side closer to the arrival side than the stopper position.

Ways of carrying out the invention are described in detail below with reference to drawings which illustrate two specific embodiments, in which:-

FIGURE 1 is a side view of the device according to the first embodiment of the present invention;

FIGURE 2 is a front view of the stacker crane of the present invention;

FIGURE 3 is an enlarged side view of the picking device 10 of the present invention;

FIGURE 4 is a plan view of the device shown in FIGURE 3;

FIGURE 5 is a side schematic view illustrating the operation of the picker device 10 of the present invention;

FIGURE 6 is a side view in elevation of another embodiment of the picker device of the present invention in one mode of operation; and

FIGURE 7 is a view similar to FIGURE 6 showing the device in another operative position.

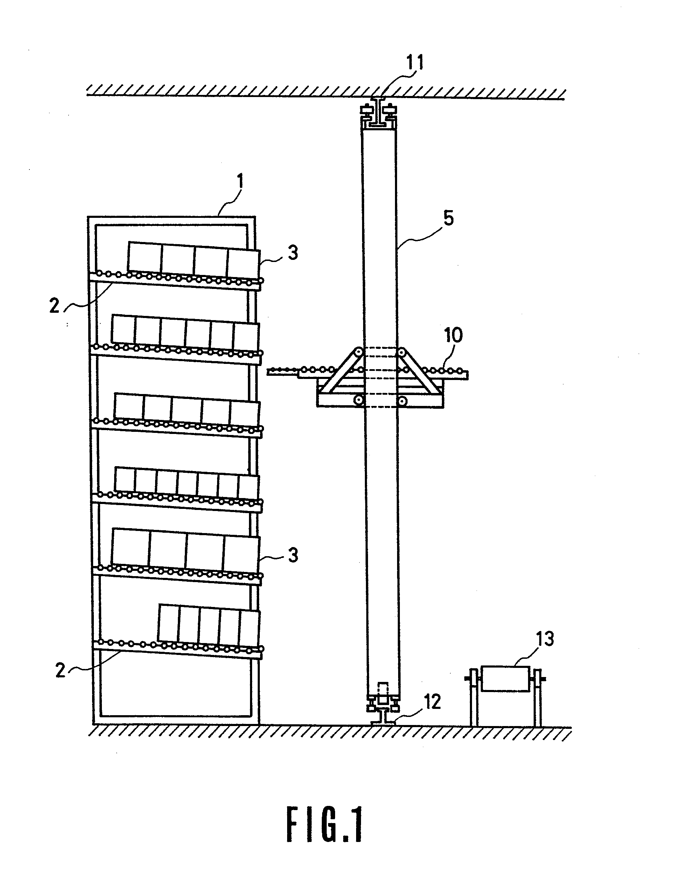

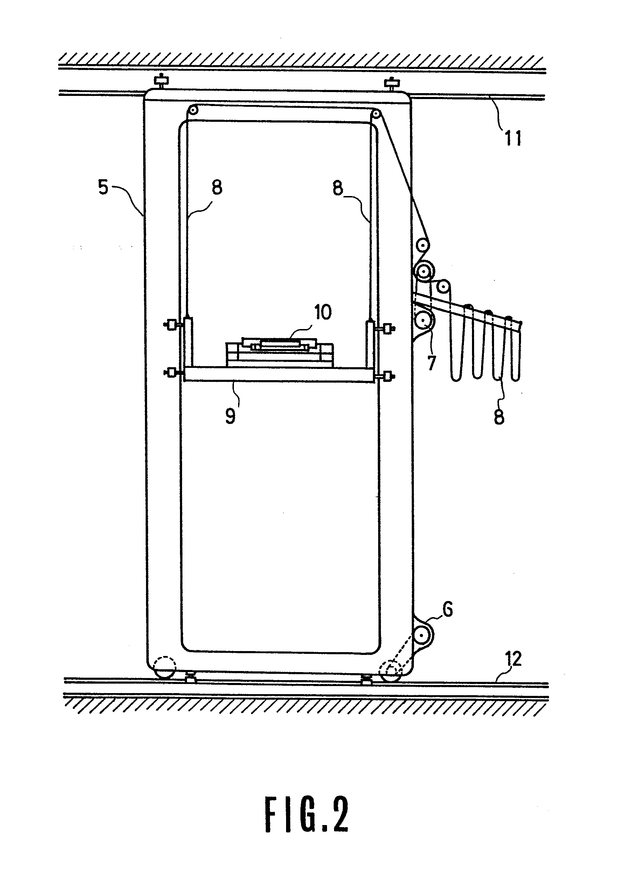

In Figs. 1 and 2, wheel conveyors 2 are assembled in multi-stacks (6 stacks in this case) in a case flow rack 1. These wheel conveyors 2 are sloped downward respectively to cause cartons 3 mounted thereon to slide by their own weight. A large number of cartons 3 of the same type is placed on each of the wheel conveyors 2 in said case flow rack 1.

The reference numeral 5 denotes a stacker crane comprising a travelling drive member 6, an elevator drive member 7 and an elevator 9 suspended by a chain 8. The elevator 9 is mounted with a picking device 10 of the present invention. The elevator 9 is structured to move the stacker crane 5 vertically to a position adjacent to each of the wheel conveyors 2. The main body of the stacker crane 5 is structured to travel between the case flow rack and another case flow rack (not shown) by way of an upper rail 11 and a lower rail 12.

In the structure constructed as above, the picking device 10 takes out desired cartons 3 one by one from the wheel conveyors 2 of the case flow rack 1 while counting each piece, and discharges the same onto a conveyor 13.

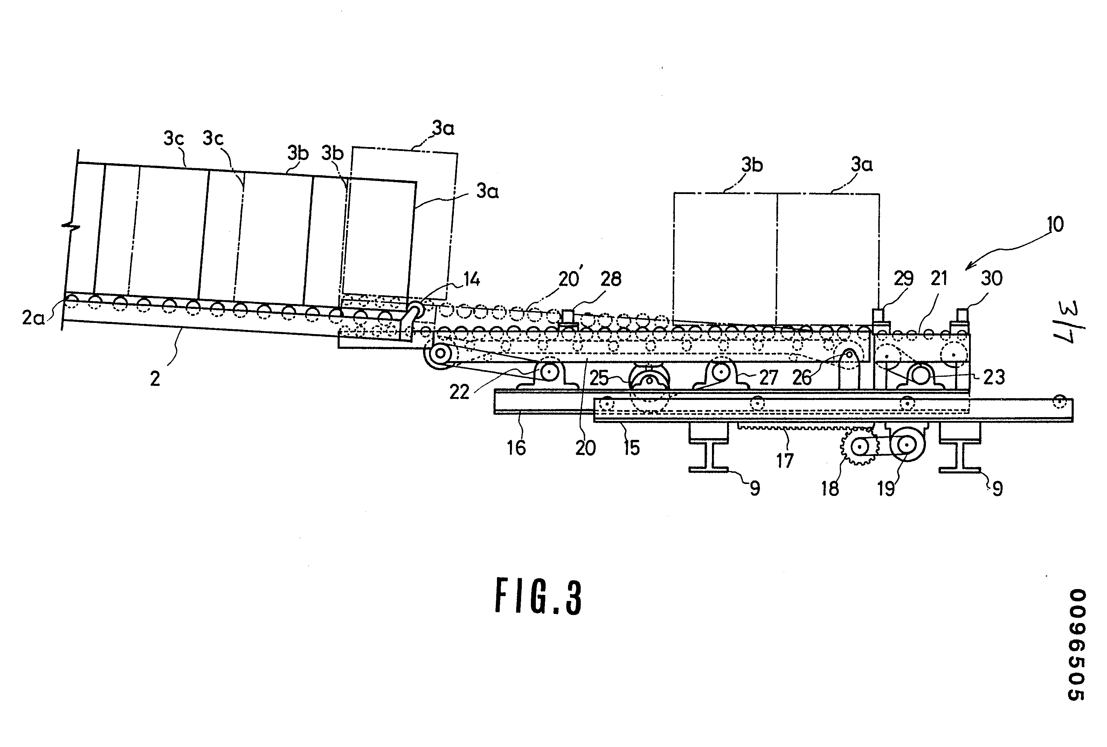

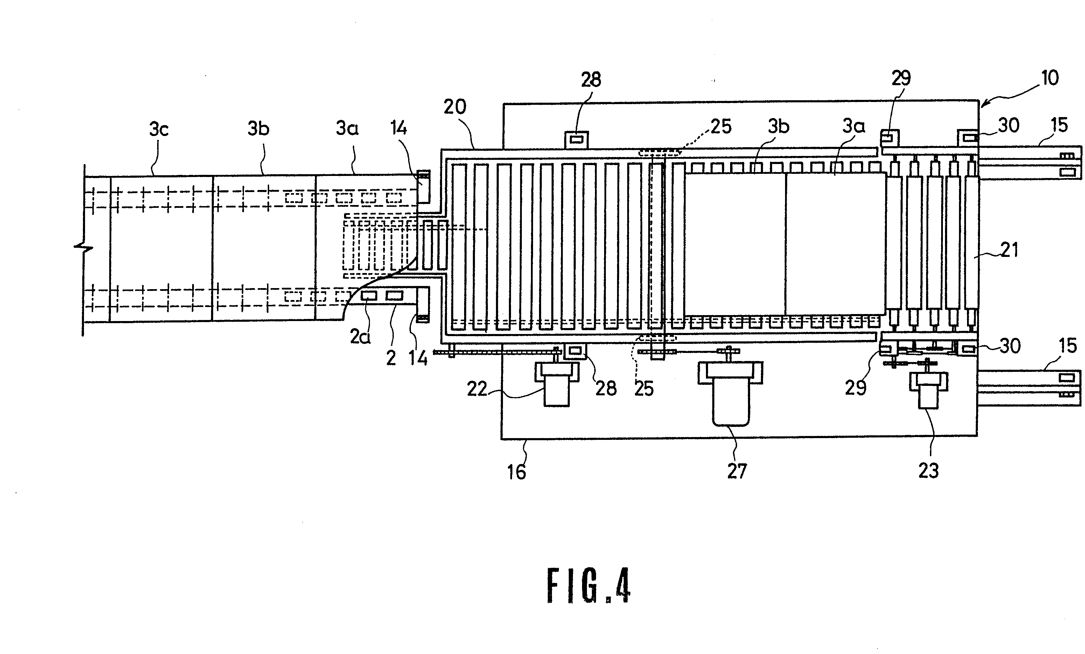

In Figs. 3 and 4, the wheel conveyor 2 is provided with a stopper 14 on its end projecting from the top surface of the conveyor 2 to a predetermined height for stopping the cartons 3 from sliding further. On the base frame 15 of the picking device 10 mounted on the elevator 9 is provided a slide frame 16/in a freely slidable manner. More particularly, the slide frame 16 slides by the revolution of a pinion 18 of the base frame 15 which is geared with a rack 17 fixed on the slide frame 16. The reference numeral 19 denotes a pinion driving member.

A take-out conveyor 20 or the second conveyor is mounted on the slide frame 16 as well as a brake acceleration conveyor 21. The reference numeral 22 denotes a take-out conveyor driving means, and 23 denotes a brake/acceleration conveyor driving means. The slide frame 16 is provided with an eccentric cam 25 which swings the take-out conveyor 20 vertically. The reference numeral 26 denotes a point supporting the vertical movement of the take-out conveyor, and 27 denotes an eccentric cam driving means. The reference numerals 28 to 30 denote a photoswitch.

The operation of the device according to the present invention will now be described hereinbelow. As cartons 3a, 3b, 3c are loaded on a wheel conveyor 2, the stacker crane 5 receives a picking signal to bring the elevator 9 to a position next to the end of the wheel conveyor 2 as shown in the drawing.

The slide frame 16 is brought from the base frame 15 toward the stopper 14 by the engagement of the rack 17 with the pinion 18. By such an operation, the end of the take-out conveyor 20 comes between two stacks of free rollers 2a of the wheel conveyor 2 and below the carton 3a which is positioned at the utmost end.

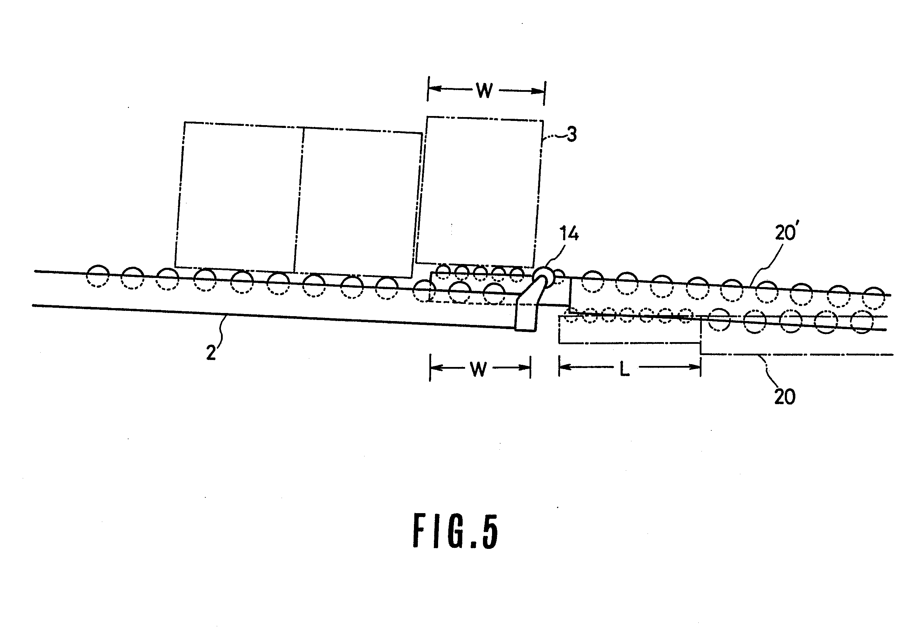

Fig. 5 is a view to show the relation among the length L of the end portion of the take-out conveyor 20, the travelling distance W from the stopper 14 at the utmost end and the length w of the carton 3. In order to smoothly transport cartons 3, the following formula should hold;

$$L > W \ldots \qquad (1)$$

$$w > W > 1/2 w \ldots \qquad (2)$$

where w, W and L are as shown in the drawings and wherein the center of gravity of the carton 3 is located at the center of the carton.

In Fig. 3, as the eccentric cam 25 is subsequently rotated by 180° by the eccentric cam driving means 27, the end portion of the take-out conveyor 20 is brought upward in respect of the supporting point 26 thereof. By this operation, the carton 3a is lifted up by the end portion of the take-out conveyor 20 and, when the end portion rises beyond the height of the stopper 14, the carton 3a is transferred to the take-out conveyor 20 and moved thereon by the take-out conveyor driving means 22. As the carton 3a moves, the subsequent cartons 3b and 3c are brought forward on the wheel conveyor 2 by the downward slope and by the pressure of following cartons. As the carton 3a moves on the take-out conveyor 20 and intercepts the light to the photoswitch 28, the eccentric cam 25 revolves by 180° to bring the take-out conveyor 20 to the horizontal position and the conveyor 20 is then driven back to the original position by the pinion driving means 19.

As the take-out conveyor 20 returns to the horizontal position, the subsequent carton 3b is pushed forward by the still subsequent carton 3c to a position previously held by the carton 3a. If further picking operation is desired, the above-described operations are repeated to take out a carton 3b onto the take-out conveyor 20.

When a predetermined picking operation ends, the elevator 9 comes downward to the conveyor 13 shown in Fig. 1. The brake/acceleration conveyor driving means 23 is subsequently driven to transfer cartons 3a to the conveyor 13 at an accelerated speed. If the conveying speed V1 of the brake/acceleration conveyor 21 is designed at a value higher than the conveying speed V2 of the take-out conveyor 20, a void space will become generated between the carton 3a and the carton 3b as the carton 3a is transported by the brake acceleration conveyor 21. When the subsequent carbon 3b is detected by the photoswitch 29 provided in that space, the take-out conveyor 20 is suspended temporarily. The take-out conveyor 20 transfers the carton 3b to the brake/acceleration conveyor 21 after detection by the photoswitch 30 that the carton 3a has been transported to the conveyor 13.

By repeating the above operations, it is possible to automatically pick a predetermined number of cartons of desired types from arbitrary racks of the case flow rack.

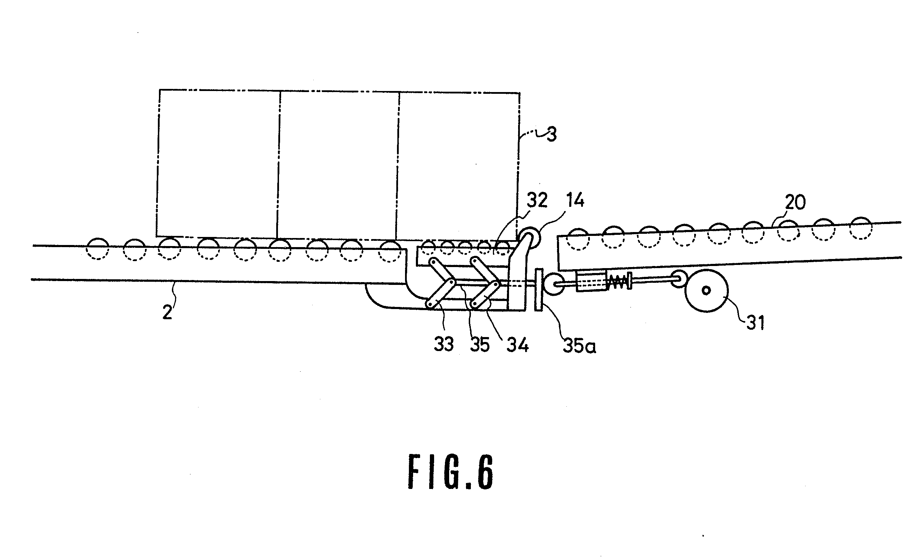

Fig. 6 is a side view of another embodiment of the device according to the present invention. In Fig. 6, the take-out conveyor 20 is fixed to the elevator (not shown) and is provided with an eccentric cam 31 on the lower portion thereof in a freely movable manner. The stopper 14 on the end of the wheel conveyor 2 is provided with a small conveyor section as the second conveyor on the outgoing side of the rack. The small conveyor 32 is attached to two pairs of links 33, 34. Those links 33, 34 are connected to a lever 35, the end of which is attached to a disc 35a.

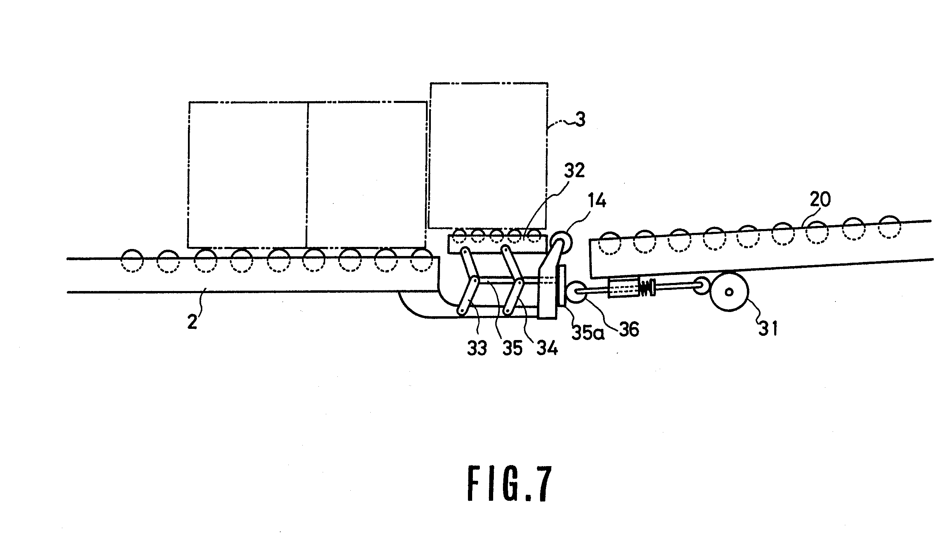

The small conveyor 32 is structured to move vertically to the position shown in Figure 7 by abutting the cam follower 36 of the eccentric cam 31 against disc 35a.

Without installing an additional means to move the take-out conveyor 20 horizontally, this facilitates taking out of the carton 3.

In the above embodiment, the relation between the travelling distance W of the take-out conveyor 20 and the length w of the carton 3 was expressed by the formula (1). But the formula holds only for the case where cartons 3 are supplied continuously to a wheel conveyor 2 and the cartons 3 to be taken out are constantly subjected to the pressure. If the wheel conveyor is of a ratchet-housed type of which wheels or rollers are revolved in only one direction, the cartons can be taken out to the range expressed by the formula;

$$w > W > 1/3w \ldots \qquad (3)$$

The travelling distance W can be varied according to the sizes of the carton by increasing the length L of the end portion of the take-out conveyor 20.

The number of cartons to be taken out by the take-out conveyor 20 is not necessarily one but may be increased to 2 or more by varying the length L of the end portion of the conveyor 20 and the moving distance W.

The articles to be mounted on the conveyor are not limited to cartons, but may be of other types.

As described in the foregoing, this invention can provide an inexpensive picking device which occupies less space and which can automatically pick a predetermined volume of loads of various types by constructing the device in a manner that at least one portion of the conveyor to take out the loads from the wheel conveyors at a position closer to the arrival side of the loads than the stopper position of the wheel conveyors so that the sliding surface of the conveyor is variably positioned above the stopper position.

0096505

WHAT IS CLAIMED IS:

1. A transfer apparatus for articles comprising a first conveyor having a top surface having means on which articles are slidable, said first conveyor having, adjacent one end thereof, stopper means projecting to a selected height above said top surface to stop articles sliding on said first conveyor, a second conveyor having an end portion which is positionable between said stopper means and the other end of said first conveyor means, said second conveyor having a top surface with sliding means movable between a position below said selected height of said stopper means of said first conveyor and a position above said selected height, said second conveyor means being of a size to accommodate a selected number of articles stopped by said stopper means of said first conveyor when said end portion of said second conveyor is moved above said selected height.

2. A transfer apparatus as claimed in claim 1 wherein a plurality of said first conveyors are provided and each are provided with a downward slope toward said stopping means, said second conveyor having a downward slope toward an end thereof opposite said end portion when said surface of said second conveyor is moved to said position above said selected height of said stopper means.

3. A transfer apparatus as claimed in claim 1 or 2 wherein said second conveyor is movable toward and away from said first conveyor.

4. A transfer apparatus as claimed in claim 3 whereby the extent of movement of said second conveyor is variable.

5. An apparatus as claimed in claim 1 wherein said second conveyor including said end portion is positionable closer to the opposite end of said first conveyor than to said stopper means position.

**FIG.1**

FIG.2

FIG.3

0096505

FIG.4

0096505

5/7

FIG.5

**FIG.6**

FIG.7

## DOCUMENTS CONSIDERED TO BE RELEVANT

EP 83302978.8

| Category | Citation of document with indication, where appropriate, of relevant passages | Relevant to claim | CLASSIFICATION OF THE APPLICATION (Int. Cl. 3) |
|---|---|---|---|
| X | <u>DE - A1 - 2 407 756</u> (ACKER) <br> * Ansprüche 1-16; Fig. 1-3 * | 1,2,3,4 | B 65 G 1/08 |
| X | <u>DE - A - 2 319 058</u> (OEHLER-, <u>WYHLEN-LAGERTECHNIK</u>) <br> * Ansprüche 1-4, 14-20; Fig. 1a,1b,2,4 * | 1,2,3 | |
| A | <u>US - A - 3 805 974</u> (ANDERSSON) <br> * Fig. 1 * | 1,2,3 | |
| A | <u>DE - B2 -2 109 832</u> (WILDENAUER) <br> * Fig. 1,3 * | 1,3 | |
| A | <u>DE - A1 - 2 934 619</u> (MANNESMANN) <br> ---- | | TECHNICAL FIELDS SEARCHED (Int. Cl. 3) <br><br> B 65 G 1/00 <br> B 66 F 9/00 |

The present search report has been drawn up for all claims

| Place of search <br> VIENNA | Date of completion of the search <br> 13-09-1983 | Examiner <br> PISSENBERGER |
|---|---|---|